# EUROPEAN PATENT APPLICATION

(11) **EP 2 246 788 A1**
(43) Date of publication of application: **03.11.2010**
(21) Application number: 09159084.4
(22) Date of filing: 29.04.2009
(51) Int. Cl.: G06F 11/36

(54) **A method, a system and a computer program for testing a user interface functionality**

(71) Applicant: Optofidelity OY, 33720 Tampere (FI)
(72) Inventor: Kuosmanen, Hans, 36200, Kangasala (FI); Pirinen, Ossi, 33300, Tampere (FI)
(74) Representative: Rahkonen, Erkki Juhani

(57) **Abstract**

The invention concerns a method, a system and a computer program for testing a user interface functionality. In the method a video stream comprising image frames of the user interface is obtained and a part of the video stream is analyzed. The part of the video stream comprises a frame and one or more temporally surrounding frames for the frame. The analysis comprises determining whether the part of the video stream comprises change in one or more areas in the image data between the frame and the surrounding frames; defining an event based on changing and stabile situations in the user interface; and acquiring a number of arbitrary external signals and relating at least one of said signals to the event. The analysis is repeated until a condition for finishing the analysis is met.

## Description

### Field of the Invention

The present invention relates to a method, to a system and to a computer program for testing a user interface functionality.

### Background of the Invention

Devices that comprise any UI (User Interface) input/output elements need testing to make sure that the UI operates as designed. Testing may relate to the usability of the user interface and the functions related to it or to technical functionality of the user interface. Usability testing expects the presence of a user, because the experience of the usability is subjective. The functional testing on the other hand relates to the operational side of the user interface. Functional testing determines if the output that is a result of the certain action is correct or not. The testing may be based on visual events that occur in the device under testing.

As an example, the functional testing relating to a DVD player may consists of testing the graphical menus that are presented on a display and testing the LED action on the panel of the DVD player. Visual event can therefore be any visual change on user interface being presented on the display or on the panel. This kind of testing can be implemented manually by a human that either monitors the testable object during testing or watches a video of a recorded test case.

Manual observation may comprise e.g. imaging the test object with a video camera, watching the video and making the analysis based on watching; or monitoring the test object manually and using stopwatch for timing the events. The drawback that relates to the first solution is the time that is needed for monitoring and reporting. Watching the video and reporting the results take much more time than to the testing process itself. For example, monitoring and reporting of a test of 30 seconds containing multiple events will easily take one hour.

The drawback of totally manual observation relates to observer's (i.e. a human) limited capability to detect and report the events. In practice, human's competence of observations is two events per second at the most, and reporting the events during observations is even worse. In addition, the measurement cannot be easily repeated, especially within humans. However, in such a manual solution the testing and the implementation can be made fast.

Functional testing may be also carried out by a computer vision solution. In such a solution, a tailored application for computer vision needs to be developed using tools for the computer vision environment in question. When such an application is developed, each monitoring application requires an expert in computer vision who knows how to create a certain application. Often, the process for tailoring the application takes more time than the monitoring/testing itself. The time needed for designing the application will increase in relation to the amount of events being monitored. Even though the computer vision system requires additional development, the application provides accurate observation and reporting, and the testing is easy and fast.

In yet another example a monitor camera monitors the device under test and measures changes from ROI areas (Region Of Interest). However, in such a solution the ROI areas need to be configured before testing.

Even though various solution for functional UI testing can be found from related art, it is appreciated that an improved solution is still needed. It is therefore the aim of the present invention to provide a solution that is both fast and accurate, and eases the measuring and reporting of visual events on the user interface temporally.

### Summary of the Invention

The invention relates to testing a user interface functionality by detecting and timing visual events in the user interface. The test is carried out by analyzing a video stream. The invention also relates to synchronizing external signals temporally with the detected events. The invention can be performed by a method, a system and a computer program.

The method according to an example comprises obtaining a video stream comprising image frames of the user interface and analyzing a part of the video stream, said part comprising a frame and one or more temporally surrounding frames for the frame. The analysis comprises determining whether the part of the video stream comprises change in one or more areas in the image data between the frame and the surrounding frames; defining an event based on changing and stabile situations in the user interface; acquiring a number of arbitrary external signals and relating at least one of said signals to the event. The analysis is repeated until a condition for finishing the analysis is met.

The system according to an example comprises means to obtain a video stream comprising image frames of the user interface; analyzing means configured to analyze a part of the video stream, said part comprising a frame and one or more temporally surrounding frames for the frame. The analyzing means is further configured to determine whether the part of the video stream comprises change in one or more areas in the image data between the frame and the surrounding frames and to define an event based on changing and stabile situations in the user interface, to acquire a number of arbitrary external signals and to relate at least one of said signals to the event and to repeat the analysis until a condition for finishing the analysis is met.

The computer program according to an example comprises code means adapted to perform - when the program is run on a computer - at least the above-mentioned method.

The present solution comprises detecting events by means of changing and stabile situations in the user interface. Basically the solution concerns defining an event by means of a change between two stabile situations, but it is appreciated that the event can be defined also in some other way that takes into account the relationship of the stabile and changing situations.

The present solution detects the events without prior reference, only by analysis of a video captured during testing. Because of this, separate teaching and configuration step is not needed. The invention enables easier implementation of the testing automation and its utilization with test objects for which e.g. computer vision system has not been possible because of lack of technical skills.

In addition, the present solution is capable of relating (synchronizing) external signals to the detected events, which has not been possible in manual observation.

### Description of the Drawings

The invention is described in more detailed with the following disclosure and with reference to drawings, where
- Figure 1: illustrates an example of the present system,
- Figure 2: illustrates an example of a test target,
- Figure 3: illustrates another example of the test target,
- Figure 4: illustrates yet another example of the test target, and
- Figure 5: illustrates a part of the video stream.

### Detailed Description of the Invention

In the present solution a user interface (UI) is tested in order to analyse its performance and functionality. The user interface can be computer-based (electrical) graphical user interface, a text-based (command line) user interface or a LED-based user interface; or mechanical appliance that has mechanically changing appearance (mechanical user interface). A common definition is that they all display information due to user interaction or external change in environment or input signal to the device. Electrical user interfaces can be found from various electronic devices. For example, device settings are usually set via a user interface (e.g. TV, DVD), device is used via user interface (computer, mobile phone, PDA) and device may give information via user interface (web sites, program guides, teletext). Led-based user information is typically used for giving information on the state of the device.

Mechanical user interface, on the other hand, may relate to any device that is given input (mechanically, electrically, thermally etc.), but which outputs data by mechanical means. A non-limiting example is a speedometer of a vehicle, that changes its appearance according to driver's input (via accelerator). Another example is a thermometer. Even though these examples are described in connection with the mechanical user interface, it is appreciated that these examples can also comprise some other user interface. Therefore, all previous examples should be considered as non-binding to the user interface being mentioned.

In addition to the previous examples, also computer instructions creating the user interface should be interpreted as a user interface in this description, and thus should be included in the scope of the invention. More detailed description of this is given later.

The testing of the user interface is based on the events occurring in the UI due to using the device comprising the UI. The event is a change in the UI that can be realized visually. In other words, the change corresponds to one or more changing phenomenon in the user interface. The change may occur in the user interface elements, in one or more areas in the image data. Any visual output as a result from a certain input is an event. It is appreciated that in this context, term event can be defined by means of a stabile situation. Therefore, the "event" can be seen as a change or a transition between the stabile situations. And the change - as already mentioned - can be effected by a user, or by an external signal.

Therefore, the motive of the present solution is to detect these visual events in the user interface (or in the instructions creating the UI), and to base an analysis on them.

An example of a system for detecting visual events may comprise a camera for imaging an object (*i*.*e*. the user interface) and a processing unit. The processing unit may comprise an analysis program and a database. The analysis program is configured to detect the visual events from the video being captured. The analysis program is also capable of storing external signals synchronized to visual events. This means that if the analysis program notices any external signal (e.g. a keystroke or turning on a LED), the analysis program is capable of synchronizing that signal to a visual event (indication that the external signal either caused the event or was a result of the event).

In the analysis of the video stream, the image material is analyzed both temporally and spatially. Visual events are detected from the video by analyzing a part of the video stream that comprises a single frame being captured at a certain time and one or more frames (temporally) surrounding the single frame, so called "surrounding frames". When more than one successive frames are used, then an average of the frames is determined, and the average is used in the analysis. The one or more frames to which the present frame is compared, does not need to be immediately the previous, but may originate also from earlier time. If there is not enough change between the frames under analysis, the analysis considers the situation stabile. However, if there is change between the frames, and the amount of the change exceeds the predefined threshold value, the situation can be seen dynamic. Each frame of the video can be compared to one or more surrounding frames. This gives an accurate event listing. If an external signal (e.g. a keystroke, the volume of the audio signal, voltage level, etc.) changes correspondingly the analysis considers the situation as an external change.

The analysis may define event boundaries by means of stabile situations just before and after the change. The boundaries may be defined temporally (at what time the change occurred) or spatially (where the UI elements located in the user interface before and after the change). The event boundaries may be then stored e.g. as a list in a result database. The stored list can comprise an identification (by means of which the event may be e.g. traced and classified) of a single event. An example of the identification is a time stamp when the situation occurred. Other examples of the identification are a running number, a frame number, an image or a piece of text. The identification can also be formed of more than one identifications (e.g. an image with a time stamp). The identification can also be stored for the external event. The form of the report (i.e. the stored list) may be created according to needs. The list may display the events in different ways, by showing only an event element or the images of the stabile situations (as mentioned earlier), the list may or may not indicate the time stamps. The way of how the results are provided depends on the test case.

The previous system may be modified for different purposes. For example, the system can act as a timing device that comprises the camera and the processing unit. The timing device detects the events in the video stream and reports the images and time stamps for the events after testing.

The system can also act as a device for comparing an event sequence. Such a device may also comprise a camera and a processing unit. But in order to operate, the device is taught a sequence of model events (for example going through menus in the user interface) by using a known and correctly functioning apparatus. After this, a test is run and the system is capable of comparing the sequence of events being obtained from the device under test to the sequence of events previously taught to the system. After comparison, the device may report out the differences that were detected.

The system may also comprise an external analysis device into which a video stream e.g. from an external imaging device (e.g. high speed camera) is input for analysis and reporting.

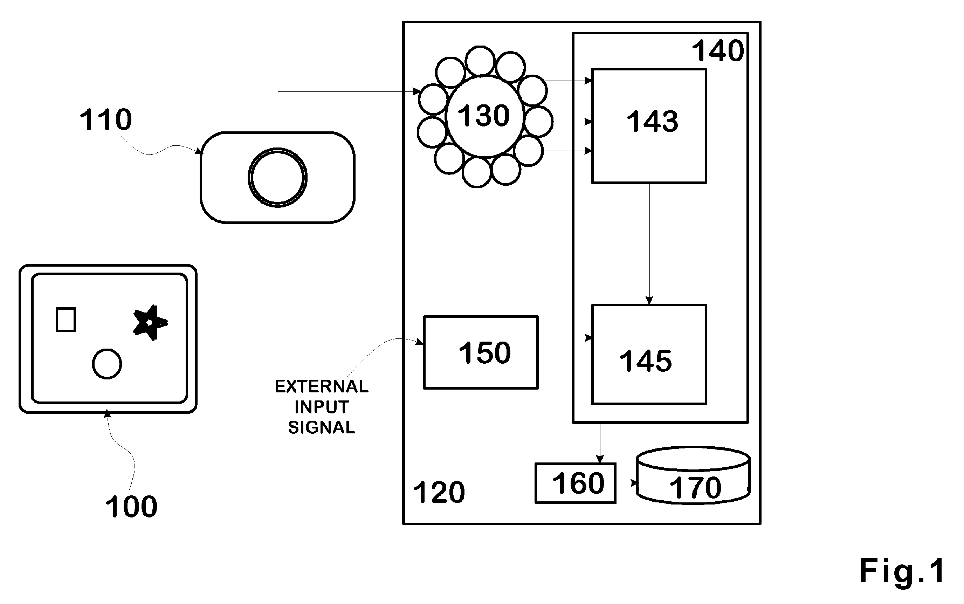

One example of the system is illustrated in Fig. 1. The system comprises an imaging device, e.g. a camera 110 acting as an image source, a temporal buffer 130 for single image frames, an analysis program 140 and a result database 170. The camera images a target 100 that comprises displayable visual elements. The camera can be a high speed camera that is coupled to a computer functioning as a processing unit 120. In this kind of implementation the processing capability can be easily increased by updating the computer, and the features of the image source can be selected to be suitable for the application. The computer may also act as a tool for storing and viewing the results. In another example, the camera and the computer is replaced with an intelligent camera integrating the image source and the processing unit.

The analysis program 140 may comprise functions for spatial masking, for calculating the event detection factor, for event decision and for event timing. In the example of Fig. 1 the analysis program 140 comprises an event detection block 143 and an event timing block 145. The event detection block 143 detects the events and determines which events from the detected events comprises change that exceeds the predetermined threshold. The event timing function 145 sets the timestamps for those events that has enough change. The analysis program 140 may also acquire external signal 150 via processing unit 120 which external signal is synchronized with the detected events in the event timing block 145. The detected events are listed 160 by the processing unit 120 and stored to the database 170.

For some applications, the analysis program 140 may also comprise a masking function for spatially masking out unwanted areas of the acquired image. This kind of masking may be useful e.g. when testing a stopwatch displaying also 1/100 seconds. In this kind of solution, when only seconds are monitored, the other irrelevant displays may be masked out. Also, if a mobile device is charged during testing, the battery indicator may be masked out.

In addition to the spatial masking, also temporal masking may be used. This means that a certain time of a video stream may be masked out. For example if it is known that the video stream comprises a presentation of 5 minutes that is not relevant for the testing, this piece of time (5 minutes) may be masked out.

In yet another example, the system does not comprise the camera as an image source, but obtains the video signal being analyzed by means of software. For example, the analysis may be based on computer instructions that creates or controls the user interface and that are run from within the processing unit.

It is appreciated that the system disclosed by this application for detecting visual events does not rely on any earlier material. This differentiates it from the typical analysis solutions. The events are detected automatically by comparing the frames to each other. This can also be realized from Fig. 1, where the database is presented as a separate unit. No material stored therein is needed for detecting events.

The system performs the analysis as long as a predetermined condition for finishing the analysis is met. This means that the analysis may be performed as long as the video stream is completed, or a predetermined event is detected or a certain external signal is acquired.

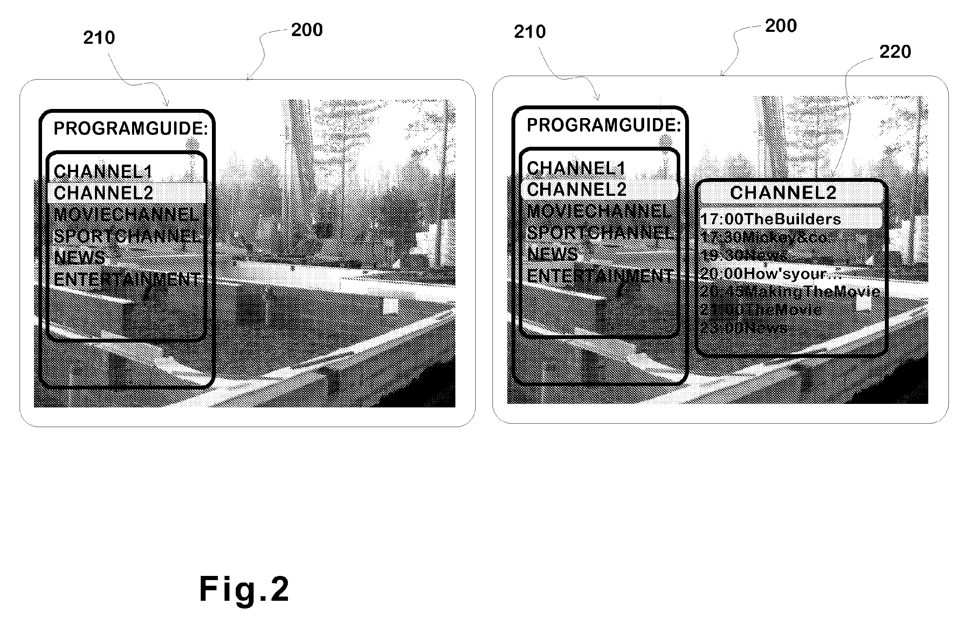

Examples of user interfaces are presented in Figures 2-4. Figure 2 illustrates a program guide 210 for television 200. Each selection the user makes results in a visual change. For example, when the user opens the program guide 210, the user interface changes for the first time. When the user scrolls through the channels, the UI changes as many times. The selection for "Channel 2" makes yet another change that is displayed as a new menu 220 comprising the next programs in Channel 2. It should be noted that when scrolling through the channel menu, the UI changes continuously. Therefore, if it is desired that all of these changes should be reported then the sampling rate for the event detection should be increased. Different sampling rates make it possible to define whether a constant change occurred or only a change in state. It is thus appreciated that the definition for "stabile" depends on the sampling rate. By greater sampling rates, more data and thus more information on the change is obtained. In addition, certain test targets may require lower sampling rate. One example is a thermometer where the change occur relatively slowly.

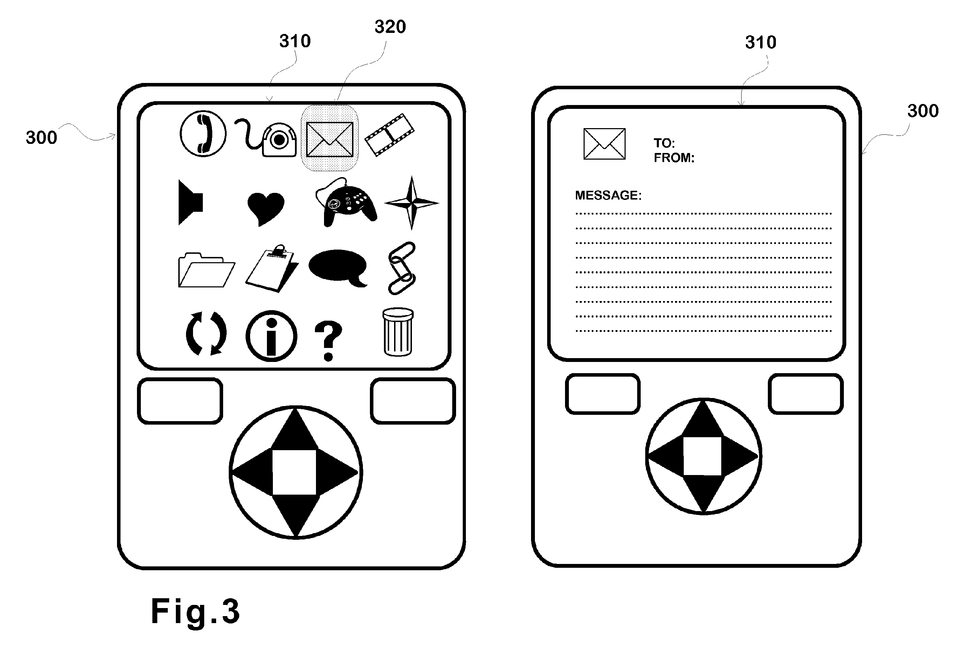

Figure 3 illustrates a display of a mobile device 300. The device 300 comprises display 310 presenting a graphical user interface comprising icons for different functions (e.g. messaging 320). In this example, the user selects an icon for messaging 320, as a result of which a new user interface for creating the message is displayed on the display 300.

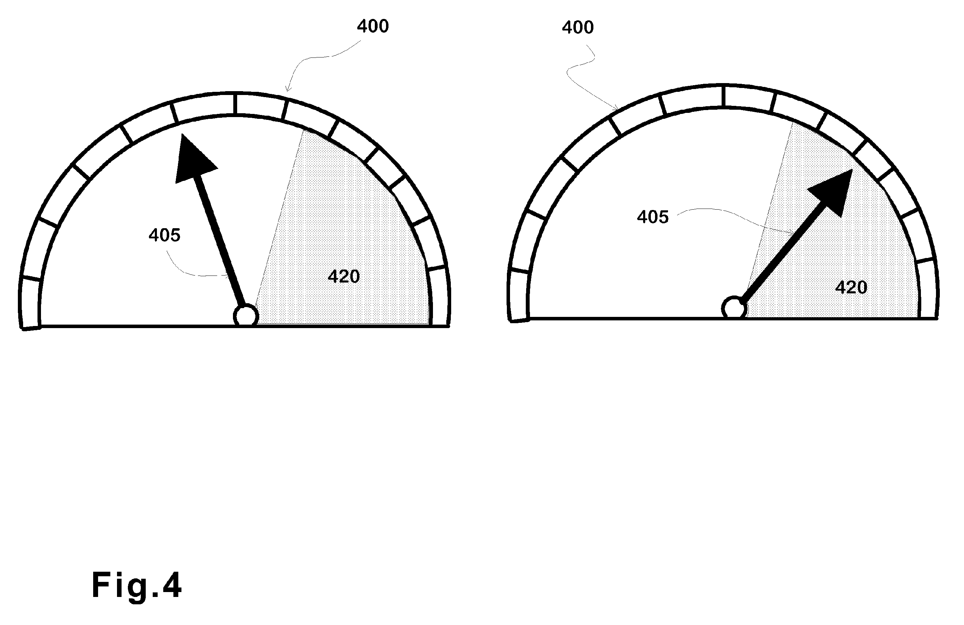

Figure 4 illustrates a mechanical user interface, being a speedometer 400 for a vehicle. In this example, the area 420 is defined as speeding area. Each time the pointer 405 travels to the speeding area 420, an alarm may be performed. For performing this analysis, the above-mentioned masking function may be used.

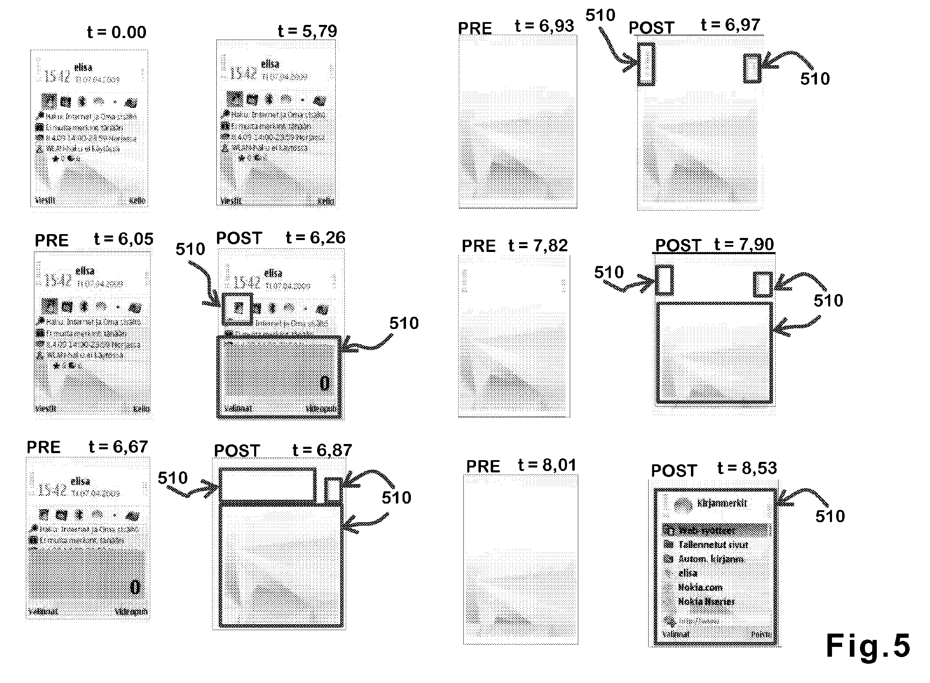

Figure 5 illustrates an example of event detection with time stamps. The test case relates to a mobile device, and to the changes on its display due to keystroke "0". Certain mobile devices display a bookmark listing after key "0" is pressed to the full. The keystroke of "0" results in an external signal (*i*.*e*. I/O event) to which detected visual events are synchronized temporally. The image frames presented in figure 5 illustrates the temporal process of the bookmark listing action. The squares 510 indicate the change that occurred on the display. In Fig. 5 some of the images have been defined as "PRE" and the rest of the images have been defined as "POST". These definitions relate whether the image frame in question represents a stabile situation before (PRE) the change or a stabile situation after (POST) the change. The analysis program provides different kind of data relating to the detected events, and the way of utilizing the data depends on the situation and application. For example, the report may provide a result table (as illustrated below) with a timestamp information, where each of the cells corresponds to an image in Fig. 5 having a time stamp that equals with "absolute time" in that cell. In the first cell, the time stamp of 0,00s corresponds to start of the test, i.e. when the testing application is turned on. This represents an example of an external signal. In the second cell, the time stamp of 5,79s corresponds to a time when the key "0" is pressed. This is another example of an external signal. The following timestamp information can be utilized in different ways in the report. Similarly, the images in Fig. 5 can be used together with the following timestamp information. There are numerous ways to make the report, and this is an example of one of those.

| **Timestamp information** | **[continued]** |
|---|---|
| Absolute time: 0,00s | Absolute time: 6,93s |
| Time from last event: 0,00s | Time from last event: 0,06s |
| Time from last I/O event: 0,00s | Time from last I/O event: 1,14s |
| Absolute time: 5,79s | Absolute time: 6,97s |
| Time from last event: 5,79s | Time from last event: 0,04s |
| Time from last I/O event: 5,79s | Time from last I/O event: 1,18s |
| Absolute time: 6,05s | Absolute time: 7,82s |
| Time from last event: 6,05s | Time from last event: 0,85s |
| Time from last I/O event: 0,26s | Time from last I/O event: 2,03s |
| Absolute time: 6,26s | Absolute time: 7,90s |
| Time from last event: 0,21s | Time from last event: 0,08s |
| Time from last I/O event: 0,47s | Time from last I/O event: 2,11s |
| Absolute time: 6,67s | Absolute time: 8,01 s |
| Time from last event: 0,41s | Time from last event: 0,11s |
| Time from last I/O event: 0,88s | Time from last I/O event: 2,22s |
| Absolute time: 6,87s | Absolute time: 8,53s |
| Time from last event: 0,20s | Time from last event: 0,52s |
| Time from last I/O event: 1,08s | Time from last I/O event: 2,74s |

By understanding the various examples of the user interfaces and different forms of result reports, the skilled person appreciates that the technical solution of the present invention makes it possible to use the system in numerous other applications, e.g. for measuring the time needed for loading a web page, for regression testing, for service testing (e.g. measuring service access time by measuring the delay in setting up any service; measuring continuity of service by measuring connection-interruption time and the retain ability of the service connection and its performance over time from the user interface) and for measuring the latency time of the keystrokes of the mobile device, just to mention few as examples.

## Claims

1. A method for testing a user interface functionality, the method comprising
- obtaining a video stream comprising image frames of the user interface
**characterized in that** the method further comprises
- analyzing a part of the video stream, said part comprising a frame and one or more temporally surrounding frames for the frame, the analysis comprising
o determining whether the part of the video stream comprises change in one or more areas in the image data between the frame and the surrounding frames
o defining an event based on changing and stabile situations in the user interface and
o acquiring a number of arbitrary external signals and relating at least one of said signals to the event
- repeating the analysis until a condition for finishing the analysis is met.

2. The method according to claim 1, **characterized in that** the method comprises repeating the analysis as long as one of the following finishing conditions is met: the video stream is completed; a predetermined event is detected; a certain external signal is acquired.

3. The method according to claim 1 or 2, **characterized in that** the method comprises defining at least one identification for the event, said identification being selected from a following group: a time stamp, a running number, a frame number, an image, a piece of text.

4. The method according to claim 1 or 2 or 3, **characterized in that** the method comprises defining event boundaries by means of stabile situations just before and after the change.

5. The method according to any of the claims 4, **characterized in that** the method comprises storing images of the event boundaries.

6. The method according to any of the preceding claims 1 to 5, **characterized in that** the method comprises storing temporal and spatial relations of the events in relation to the change.

7. The method according to any of the preceding claims 1 to 6, **characterized in that**, the method comprises obtaining a sequence of model events and comparing the defined events to the sequence of the model events.

8. The method according to any of the preceding claims 1 to 7, **characterized in that** the video stream is obtained by a software or the video stream is obtained by an imaging device.

9. The method according to any of the claims 1 to 8, **characterized in that** the user interface is graphical user interface, command-line user interface, a LED user interface or a mechanical user interface.

10. A system for testing a user interface functionality, the system comprising
- means configured to obtain a video stream comprising image frames of the user interface
**characterized in that** the system further comprises
- analyzing means configured to analyze a part of the video stream, said part comprising a frame and one or more temporally surrounding frames for the frame, the analysis means being further configured to
○ determine whether the part of the video stream comprises change in one or more areas in the image data between the frame and the surrounding frames
○ define an event based on changing and stabile situations in the user interface and
○ acquire a number of arbitrary external signals and relating at least one of said signals to the event
- wherein the analyzing means is configured to repeat the analysis until a condition for finishing the analysis is met.

11. The system according to claim 10, **characterized in that** the analyzing means is configured to repeat the analysis as long as the video stream is completed or a predetermined event is detected or a certain external signal is acquired.

12. The system according to claim 10 or 11, **characterized in that** the system is configured to define an identification for the event, said identification being selected from a following group: a time stamp, a running number, a frame number, an image, a piece of text.

13. The system according to claim 12, **characterized in that** the system comprises a database for storing the identification for the events.

14. The system according to claim 13, **characterized in that** the database is configured to store also temporal and spatial relations of the events in relation to the change.

15. The system according to any of the preceding claims 10 to 14, **characterized in that**, the system comprises means to obtain a sequence of model events and to compare the detected events to the sequence of the model events.

16. The system according to any of the preceding claims 10 to 15, **characterized in that** the means for obtaining a video stream is a software or an imaging device.

17. The system according to any of the preceding claims 10 to 16, **characterized in that** the user interface is graphical user interface, command-line user interface, a LED user interface or a mechanical user interface.

18. A computer program comprising code means adapted to test a user interface functionality, the code means being further configured to perform - when the program is run on a computer - any steps of claims 1 to 9.
